# EUROPEAN PATENT SPECIFICATION

(11) **EP 3 888 871 B1**
(45) Date of publication and mention of the grant of the patent: **02.11.2022**
(21) Application number: 21163581.8
(22) Date of filing: 19.03.2021
(51) Int. Cl.: B29C 45/17, B29C 45/76

(54) **INJECTION MOLDING MACHINE**
SPRITZGIESSMASCHINE
MACHINE DE MOULAGE À INJECTION

(30) Priority: 31.03.2020 JP 2020065110
(43) Date of publication of application: 06.10.2021
(73) Proprietor: Sumitomo Heavy Industries, Ltd., Tokyo 141-6025 (JP)
(72) Inventor: TAKAHASHI, Masaru, Chiba-shi, Chiba, 263-0001 (JP); YAMADA, Daisuke, Chiba-shi, Chiba, 263-0001 (JP)
(74) Representative: Louis Pöhlau Lohrentz

(56) References cited:
- JP-A- H04 185 411
- JP-A- 2010 105 330
- JP-B2- 6 441 272
- JP-U- S57 129 629

## Description

### BACKGROUND OF THE INVENTION

### Field of the Invention

The present invention relates to an injection molding machine.

### Description of Related Art

In a case where a mold is changed and molding is performed, a plurality of types of setup work, such as the change of a mold, the mold space adjustment of a mold clamping unit, and the purge of a molding material of an injection unit, are performed in an injection molding machine.

Japanese Unexamined Patent Publication No. H7-9524 discloses an injection molding machine including mold change means for automatically changing a mold. Japanese Unexamined Patent Publication No. 2010-105330 A discloses an injection molding machine with a production change-over function capable of starting set-up separately for a mold clamp section and an injection section. Japanese Unexamined Patent Publication No. H04-185411 A discloses a mold replacement purging method in an injection molding machine. Japanese Patent No. 6441272 B2 discloses a mold rotary injection molding apparatus in which a movable plate is opened and closed in a horizontal direction with respect to a fixed plate, and a rotary table provided with a mold is rotatably provided on one of the fixed plate and the movable plate. Japanese Utility Model Publication No. S57-129629 U discloses an injection molding machine in which at a time of exchanging raw material for the injection molding machine, the purge receiver protrudes at a right angle to the extension line connecting the raw material injection nozzle to the raw material inlet.

### SUMMARY OF THE INVENTION

Incidentally, since the operation time of the injection molding machine is shortened as setup work is lengthened, there is a concern that the productivity of the injection molding machine may be reduced. For this reason, the shortening of setup work is required.

Accordingly, an object of the invention is to provide an injection molding machine of which the productivity is improved.

An injection molding machine according to an aspect of an embodiment includes a mold clamping unit to which a mold unit is attached and a control unit, and the control unit performs other setup work during a change of the mold unit attached to the mold clamping unit.

According to the invention, it is possible to provide an injection molding machine of which the productivity is improved.

### BRIEF DESCRIPTION OF THE DRAWINGS

Fig. 1 is a diagram showing the configuration of an injection molding system according to an embodiment.
Fig. 2 is an example of a block diagram of the injection molding system according to this embodiment.
Fig. 3 is an example of a display screen displayed on a display unit.
Fig. 4 is a Gantt chart illustrating an example of setup work in the injection molding system S according to this embodiment.

### DETAILED DESCRIPTION OF THE INVENTION

An embodiment of the invention will be described below with reference to the drawings . The same or corresponding components will be denoted in the respective drawings by the same or corresponding reference numerals and the description thereof will be omitted.

### <<Injection molding system according to embodiment>>

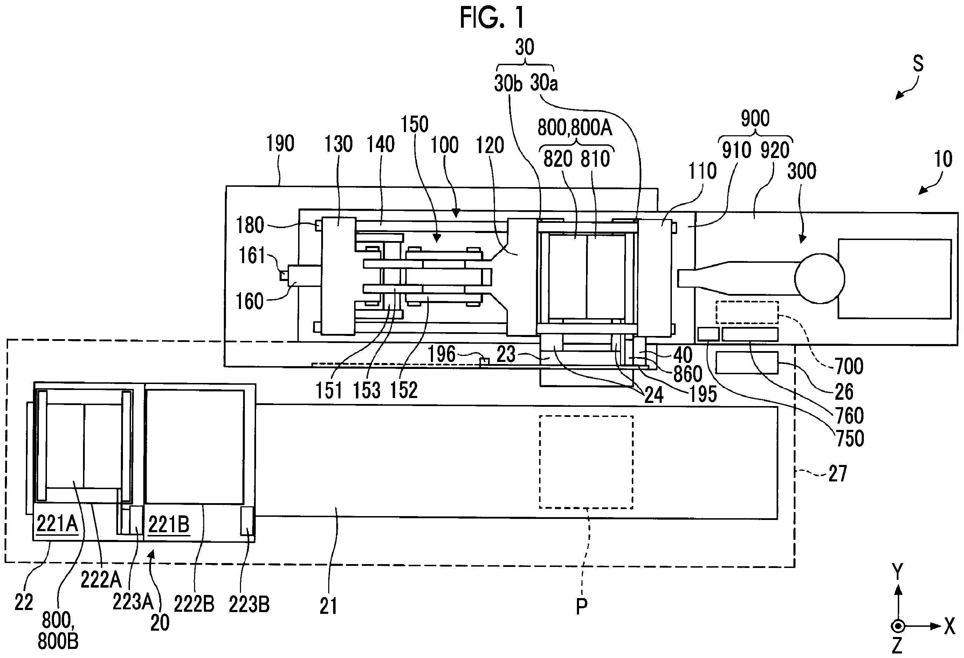

An injection molding system S according to an embodiment will be described with reference to Fig. 1. Fig. 1 is a plan view of the injection molding system S according to the embodiment. In Fig. 1, an X-axis direction, a Y-axis direction, and a Z-axis direction are directions perpendicular to each other. The X-axis direction and the Y-axis direction indicate horizontal directions and the Z-axis direction indicates a vertical direction. In a case where a mold clamping unit 100 is a horizontal type, the X-axis direction corresponds to mold opening and closing directions and the Y-axis direction corresponds to the width direction of an injection molding machine 10. A negative side in the Y-axis direction is referred to as an operation side, and a positive side in the Y-axis direction is referred to as a side opposite to the operation side.

The injection molding system S includes the injection molding machine 10. Further, the injection molding system S includes a mold change device 20, a clamping device 30, and an automatic coupler 40 as peripheral devices.

### <Injection molding machine>

The injection molding machine 10 includes a mold clamping unit 100, an ejector unit (not shown), an injection unit 300, a moving unit (not shown), a molding machine-control device 700, and a frame 900. The frame 900 includes a mold clamping unit frame 910 and an injection unit frame 920. Each of the mold clamping unit frame 910 and the injection unit frame 920 is installed on the floor (not shown) through a leveling adjuster (not shown) . The molding machine-control device 700 is disposed in the internal space of the injection unit frame 920. The respective components of the injection molding machine 10 will be described below.

### (Mold clamping unit)

In the description of the mold clamping unit 100, the moving direction of a movable platen 120 in a case where a mold is to be closed (for example, an X-axis positive direction) corresponds to a front side and the moving direction of the movable platen 120 in a case where a mold is to be opened (for example, an X-axis negative direction) corresponds to a rear side.

The mold clamping unit 100 closes, pressurizes, depressurizes, and opens a mold unit 800. An operation until the end of depressurization from the start of pressurization is also referred to as mold clamping. The mold unit 800 includes a stationary mold 810 and a movable mold 820.

The mold clamping unit 100 is, for example, a horizontal type and the mold opening and closing directions of the mold clamping unit 100 correspond to a horizontal direction. The mold clamping unit 100 includes a stationary platen 110, a movable platen 120, a toggle support 130, a tie bar 140, a toggle mechanism 150, a mold clamping motor 160, a motion conversion mechanism (not shown), and a mold space adjustment mechanism 180.

The stationary platen 110 is fixed to the mold clamping unit frame 910. The stationary mold 810 is attached to the surface of the stationary platen 110 facing the movable platen 120.

The movable platen 120 is disposed so as to be movable with respect to the mold clamping unit frame 910 in the mold opening and closing directions. A guide (not shown) for guiding the movable platen 120 is provided on the mold clamping unit frame 910. The movable mold 820 is attached to the surface of the movable platen 120 facing the stationary platen 110. In a case where the movable platen 120 is advanced and retreated with respect to the stationary platen 110, the mold unit 800 is closed, pressurized, depressurized, and opened.

The toggle support 130 is disposed with an interval between the stationary platen 110 and itself, and is placed on the mold clamping unit frame 910 so as to be movable in the mold opening and closing directions. The toggle support 130 may be disposed so as to be movable along a guide provided on the mold clamping unit frame 910. The guide for the toggle support 130 may be common to the guide (not shown) for the movable platen 120.

In this embodiment, the stationary platen 110 is fixed to the mold clamping unit frame 910 and the toggle support 130 is disposed so as to be movable with respect to the mold clamping unit frame 910 in the mold opening and closing directions. However, the toggle support 130 may be fixed to the mold clamping unit frame 910 and the stationary platen 110 may be disposed so as to be movable with respect to the mold clamping unit frame 910 in the mold opening and closing directions.

The tie bar 140 connects the stationary platen 110 to the toggle support 130 at intervals in the mold opening and closing directions. A plurality of (for example, four) tie bars 140 may be used. The plurality of tie bars 140 are disposed in parallel to the mold opening and closing directions and extend depending on a mold clamping force . At least one tie bar 140 may be provided with a tie bar strain detector (not shown) that detects the strain of the tie bar 140. The tie bar strain detector (not shown) sends a signal indicating the detection result thereof to the molding machine-control device 700. The detection result of the tie bar strain detector (not shown) may be used for the detection of a mold clamping force, and the like.

The tie bar strain detector (not shown) is used in this embodiment as a mold clamping force detector for detecting a mold clamping force, but a technique of this disclosure is not limited thereto . The mold clamping force detector is not limited to a strain gauge type and may be a piezoelectric type, acapacitive type, a hydraulic type, an electromagnetic type, and the like. A position where the mold clamping force detector is attached is also not limited to the tie bar 140.

The toggle mechanism 150 is disposed between the movable platen 120 and the toggle support 130, and moves the movable platen 120 with respect to the toggle support 130 in the mold opening and closing directions. The toggle mechanism 150 includes a crosshead 151, a pair of link groups, and the like. Each of the pair of link groups includes a first link 152 and a second link 153 that are bendably and stretchably connected to each other by a pin or the like. The first link 152 is oscillatingly attached to the movable platen 120 by a pin or the like, and the second link 153 is oscillatingly attached to the toggle support 130 by a pin or the like. The second link 153 is attached to the crosshead 151 through a third link (not shown). In a case where the crosshead 151 is advanced and retreated with respect to the toggle support 130, the first and second links 152 and 153 are bent and stretched and the movable platen 120 is advanced and retreated with respect to the toggle support 130.

The configuration of the toggle mechanism 150 is not limited to the above-mentioned configuration. For example, the number of nodes of each link group is five in the above description but may be four. One end portion of the third link (not shown) may be connected to the node between the first and second links 152 and 153.

The mold clamping motor 160 is attached to the toggle support 130 and operates the toggle mechanism 150. The mold clamping motor 160 advances and retreats the crosshead 151 with respect to the toggle support 130 to bend and stretch the first and second links 152 and 153 and to advance and retreat the movable platen 120 with respect to the toggle support 130. The mold clamping motor 160 is directly connected to the motion conversion mechanism (not shown), but may be connected to the motion conversion mechanism (not shown) through a belt, pulleys, and the like.

The motion conversion mechanism (not shown) converts the rotary motion of the mold clamping motor 160 to the linear motion of the crosshead 151. The motion conversionmechanism (not shown) includes a screw shaft and a screw nut that is threadedly engaged the screw shaft. Balls or rollers may be interposed between the screw shaft and the screw nut.

The mold clamping unit 100 performs a mold closing process, a pressurization process, a depressurization process, a mold opening process, and the like under the control of the molding machine-control device 700.

In the mold closing process, the mold clamping motor 160 is driven to advance the crosshead 151 to a mold closing completion position at a set movement speed, so that the movable platen 120 is advanced to cause the movable mold 820 to touch the stationary mold 810. The position and the movement speed of the crosshead 151 are detected using, for example, a mold clamping motor encoder 161 or the like. The mold clamping motor encoder 161 detects the rotation of the mold clamping motor 160, and sends a signal indicating the detection result thereof to the molding machine-control device 700.

A crosshead position detector for detecting the position of the crosshead 151 and a crosshead movement speed detector for detecting the movement speed of the crosshead 151 are not limited to the mold clamping motor encoder 161, and general detectors can be used. Further, a movable platen position detector for detecting the position of the movable platen 120 and a movable platen movement speed detector for detecting the movement speed of the movable platen 120 are not limited to the mold clamping motor encoder 161, and general detectors can be used.

In the pressurization process, the mold clamping motor 160 is further driven to further advance the crosshead 151 to a mold clamping position from the mold closing completion position and to generate a mold clamping force. A cavity space (not shown) is formed between the movable mold 820 and the stationary mold 810 in a case where the molds are clamped, and the injection unit 300 fills the cavity space (not shown) with liquid molding material. A molding product is obtained in a case where the molding material filling the cavity space is solidified.

One cavity space (not shown) may be set or a plurality of cavity spaces may be set. In the latter case, a plurality of molding products are obtained at the same time. An insert material may be disposed in a part of the cavity space (not shown) and the other part of the cavity space (not shown) is filled with a molding material. A molding product in which the insert material and the molding material are integrated with each other is obtained.

In the depressurization process, the mold clamping motor 160 is driven to retreat the crosshead 151 to a mold opening start position from the mold clamping position, so that the movable platen 120 is retreated to reduce the mold clamping force. The mold opening start position and the mold closing completion position may be the same position.

In the mold opening process, the mold clamping motor 160 is driven to retreat the crosshead 151 to a mold opening completion position from the mold opening start position at a set movement speed, so that the movable platen 120 is retreated to cause the movable mold 820 to be separated from the stationary mold 810. After that, the ejector unit (not shown) ejects the molding product from the movable mold 820.

Set conditions in the mold closing process and the pressurization process are collectively set as a series of set conditions. For example, the movement speeds and the positions (including a mold closing start position, a movement speed switching position, a mold closing completion position, and a mold clamping position) of the crosshead 151 and mold clamping forces in the mold closing process and the pressurization process are collectively set as a series of set conditions. The mold closing start position, the movement speed switching position, the mold closing completion position, and the mold clamping position are arranged in this order from the rear side toward the front side, and indicate the starting points and the end points of sections in which the movement speeds are set. The movement speed is set for each section. One movement speed switching position may be set or a plurality of movement speed switching positions may be set. The movement speed switching position may not be set. Only one of the mold clamping position and the mold clamping force may be set.

Set conditions in the depressurization process and the mold opening process are also collectively set in the same manner. For example, the movement speeds and the positions (including a mold opening start position, a movement speed switching position, and a mold opening completion position) of the crosshead 151 in the depressurization process and the mold opening process are collectively set as a series of set conditions. The mold opening start position, the movement speed switching position, and the mold opening completion position are arranged in this order from the front side toward the rear side, and indicate the starting points and the end points of sections in which the movement speeds are set. The movement speed is set for each section. One movement speed switching position may be set or a plurality of movement speed switching positions may be set. The movement speed switching position may not be set. The mold opening start position and the mold closing completion position may be the same position. Further, the mold opening completion position and the mold closing start position may be the same position.

The movement speeds and the positions of the movable platen 120, and the like may be set instead of the movement speeds and the positions of the crosshead 151, and the like. Further, a mold clamping force maybe set instead of the position (for example, the mold clamping position) of the crosshead or the position of the movable platen.

Incidentally, the toggle mechanism 150 amplifies the driving force of the mold clamping motor 160 and transmits the amplified driving force to the movable platen 120. The amplification factor of the toggle mechanism 150 is also referred to as a toggle factor. The toggle factor is changed depending on an angle between the first and second links 152 and 153 (hereinafter, also referred to as a "link angle") . The link angle is obtained from the position of the crosshead 151. In a case where the link angle is 180°, the toggle factor is maximum.

In a case where the space of the mold unit 800 is changed due to the change of the mold unit 800, a change in the temperature of the mold unit 800, or the like, mold space adjustment is performed so that a predetermined mold clamping force is obtained in a case where the molds are clamped. In the mold space adjustment, an interval between the stationary platen 110 and the toggle support 130 is adjusted so that the link angle of the toggle mechanism 150 is a predetermined angle at a point of mold touch time when, for example, the movable mold 820 touches the stationary mold 810.

The mold clamping unit 100 includes the mold space adjustment mechanism 180 that performs mold space adjustment by adjusting an interval between the stationary platen 110 and the toggle support 130. The mold space adjustment mechanism 180 includes, for example, screw shafts that are formed at the rear end portions of the tie bars 140, screw nuts that are rotatably held by the toggle support 130 not to be capable of being advanced and retreated, and a mold space adjustment motor that rotates the screw nuts threadedly engaged with the screw shafts.

The screw shaft and the screw nut are provided for each tie bar 140. The rotational driving force of the mold space adjustment motor may be transmitted to a plurality of screw nuts through a rotational driving force transmission part. The plurality of screw nuts can be rotated in synchronization. It is also possible to individually rotate the plurality of screw nuts by changing the transmission channel of the rotational driving force transmission part.

The rotational driving force transmission part includes, for example, gears and the like. In this case, a driven gear is formed on the outer periphery of each screw nut. A driving gear is attached to the output shaft of the mold space adjustment motor. An intermediate gear, which meshes with a plurality of driven gears and a plurality of driving gears, is rotatably held at the central portion of the toggle support 130. The rotational driving force transmission part may include a belt, pulleys, and the like instead of the gears.

The operation of the mold space adjustment mechanism 180 is controlled by the molding machine-control device 700. The molding machine-control device 700 drives the mold space adjustment motor to rotate the screw nuts. As a result, the position of the toggle support 130, by which the screw nuts are rotatably held not to be capable of being advanced and retreated, with respect to the tie bars 140 is adjusted, so that an interval between the stationary platen 110 and the toggle support 130 is adjusted. A plurality of mold space adjustment mechanisms may be used in combination.

The interval is detected using a mold space adjustment motor encoder. The mold space adjustment motor encoder detects the amount of rotation and the rotation direction of the mold space adjustment motor, and sends signals indicating the detection results thereof to the molding machine-control device 700. The detection results of the mold space adjustment motor encoder are used for the monitoring and control of the position of the toggle support 130 and the interval. A toggle support position detector for detecting the position of the toggle support 130 and an interval detector for detecting the interval are not limited to the mold space adjustment motor encoder, and general detectors can be used.

The mold clamping unit 100 of this embodiment is a horizontal type of which mold opening and closing directions correspond to a horizontal direction, but may be a vertical type of which mold opening and closing directions correspond to a vertical direction.

The mold clamping unit 100 of this embodiment includes the mold clamping motor 160 as a drive source, but may include a hydraulic cylinder instead of the mold clamping motor 160. Further, the mold clamping unit 100 may include a linear motor for opening and closing the molds and may include an electromagnet for clamping the molds.

The mold clamping unit 100 is covered with a cover 190. The cover 190 is provided with an opening portion that is used to carry in and out the mold unit 800. Further, the mold clamping unit 100 is provided with a door 195 for opening and closing the opening portion of the cover 190. Furthermore, the mold clamping unit 100 includes a door opening/closing mechanism 196 for opening/closing the door 195.

### (Ejector unit)

The ejector unit (not shown) is attached to the movable platen 120, and is advanced and retreated together with the movable platen 120. The ejector unit (not shown) performs an ejection process under the control of the molding machine-control device 700. In the ejection process, an ejector rod (not shown) is advanced to an ejection position from a waiting position at a set movement speed, so that amovablemember (not shown) is advanced to eject a molding product. After that, an ejector motor (not shown) is driven to retreat the ejector rod (not shown) at a set movement speed and to retreat the movable member (not shown) to the original waiting position.

### (Injection unit)

The injection unit 300 is disposed so as to be capable of being advanced and retreated with respect to the mold unit 800. The injection unit 300 touches the mold unit 800, and fills the cavity space (not shown) formed in the mold unit 800 with a molding material. The injection unit 300 includes, for example, a cylinder, a nozzle, a screw, a plasticizing motor, an injection motor, a pressure detector, and the like.

### (Moving unit)

The moving unit (not shown) advances and retreats the injection unit 300 with respect to the mold unit 800. Further, the moving unit (not shown) presses the nozzle against the mold unit 800 and causes nozzle touch pressure.

### (Molding machine-control device)

The molding machine-control device 700 is formed of, for example, a computer and includes a central processing unit (CPU), a storage medium, such as a memory, an input interface, and an output interface. The molding machine-control device 700 performs various types of control by causing the CPU to execute a program that is stored in the storage medium. Further, the molding machine-control device 700 receives a signal from the outside through the input interface, and transmits a signal to the outside through the output interface.

Furthermore, the injection molding machine 10 includes an operation unit 750 and a display unit 760. The operation unit 750 receives an input operation performed by a user, and outputs a signal corresponding to the input operation to the molding machine-control device 700. The display unit 760 displays a display screen, which corresponds to the input operation of the operation unit 750, under the control of the molding machine-control device 700. The display unit 760 may be formed of a touch panel, and the touch panel may form at least a part of the operation unit 750.

### <Clamping device>

Further, the injection molding machine 10 is provided with the clamping device 30 that allows the mold unit 800 to be detachably attached to the mold clamping unit 100. The clamping device 30 includes a stationary-side clamping device 30a and a movable-side clamping device 30b. The stationary-side clamping device 30a is fixed to the stationary platen 110, and the stationary mold 810 is detachably clamped by the stationary-side clamping device 30a. The movable-side clamping device 30b is fixed to the movable platen 120, and the movable mold 820 is detachably clamped by the movable-side clamping device 30b. The clamping device 30 is controlled by the molding machine-control device 700, and the mold unit 800 is attached to or detached from the clamping device 30. The clamping device 30 may be a clamping device including a mechanical lock mechanism that is operated by hydraulic pressure, air pressure, or the like, may be a clamping device that clamps molds by a magnetic force, and is not limited.

Further, the clamping device 30 may include a positioning pin (not shown) and a drive unit (not shown) that drives the positioning pin. Since the clamping device 30 clamps the mold unit 800 by the stationary-side clamping device 30a and the movable-side clamping device 30b after the positioning pin is inserted into the mold unit 800, the clamping device 30 can clamp the mold unit 800 in a state where the clamping device 30 is positioned.

### <Automatic coupler>

Further, the injection molding machine 10 is provided with the automatic coupler 40. The automatic coupler 40 of the injection molding machine 10 is connected to a connecting part 860 of the mold unit 800 to be described later in a case where the mold unit 800 is attached to the injection molding machine 10. Specifically, the automatic coupler 40 includes a drive unit (not shown) and is adapted to be capable of being connected (advanced) to and released (retreated) from the connecting part 860 of the mold unit 800. Accordingly, for example, sinceaheater (not shown) of the mold unit 800 is energized from the injection molding machine 10, the temperature of the mold unit 800 can be controlled. Further, for example, the mold unit 800 may be connected to a temperature controller (not shown) , which supplies a heating medium, through the automatic coupler 40. Accordingly, a heating medium can be supplied to a flow channel (not shown) provided in the mold unit 800. The automatic coupler 40 includes a drive unit (not shown) and is adapted to be capable of being connected (advanced) to and released (retreated) from the connecting part 860 of the mold unit 800.

### <Mold change device>

The mold change device 20 includes a traveling rail 21, abogie22, abridge23, driving rollers 24, a change device-control device 26, and a fence 27.

The bogie 22 moves on a traveling rail 21. The movement of the bogie 22 is controlled by the change device-control device 26. Further, the bogie 22 includes a first placement part 221A on which the mold unit 800 is placed and a second placement part 221B. Furthermore, thebogie22 reciprocates between a reference position (waiting position) shown in Fig. 1 and a delivery position P where the mold unit 800 is delivered to the bridge 23.

A conveyor unit 222A is provided on the upper surface of the first placement part 221A. The conveyor unit 222A is, for example, a driving roller conveyor and is controlled by the change device-control device 26. The conveyor unit 222A is used in a case where the mold unit 800 is carried in the first placement part 221A or a case where the mold unit 800 is carried out of the first placement part 221A.

Further, the first placement part 221A is provided with an automatic coupler 223A. The automatic coupler 223A is connected to the connecting part 860 of the mold unit 800 to be described later in a case where the mold unit 800 is placed on the first placement part 221A. Accordingly, for example, since the heater (not shown) of the mold unit 800 is energized from the bogie 22, the temperature of the mold unit 800 can be preliminarily controlled.

As in the first placement part 221A, the second placement part 221B is provided with a conveyor unit 222B and an automatic coupler 223B.

The bridge 23 is disposed between the bogie 22 and the injection molding machine 10, and is used in a case where the mold unit 800 is transported. A conveyor is provided on the upper surface of the bridge 23, and is controlled by the change device-control device 26.

The driving rollers 24 are disposed under the stationary platen 110 and the movable platen 120 in the injection molding machine 10. The driving rollers 24 are used in a case where the mold unit 800 carried in the injection molding machine 10 is transported to a position where the mold unit 800 is to be clamped or a case where the mold unit 800 is carried out of the injection molding machine 10. Further, the stationary platen 110 and the movable platen 120 are provided with the driving rollers 24, respectively. Both end portions of the mold unit 800 are placed on the driving rollers 24 and the driving rollers 24 transport the mold unit 800. A molding product ejected by the ejector unit can pass between the driving rollers 24. The driving rollers 24 are controlled by the change device-control device 26.

Further, the fence 27 is provided around the traveling rail 21 and the bogie 22, and prevents a worker from entering the movement range of the bogie 22.

### <Mold unit>

The mold unit 800 includes the stationary mold 810, the movable mold 820, and the connecting part 860.

The connecting part 860 is connected to the automatic coupler 40 of the injection molding machine 10 or the automatic couplers 223A and 223B of the bogie 22.

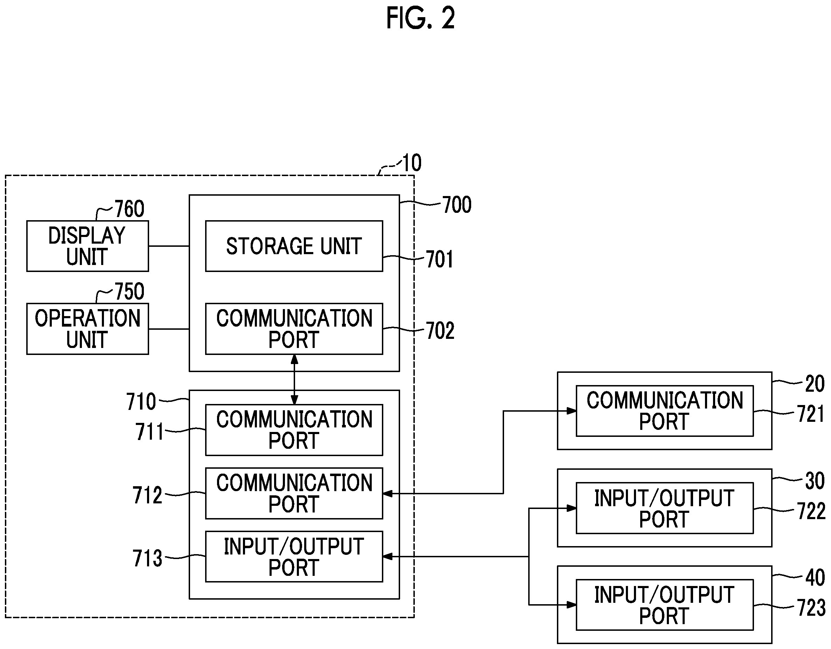

Fig. 2 is a block diagram of the injection molding system S according to this embodiment.

The molding machine-control device 700 of the injection molding machine 10 includes a storage unit 701 and a communication port 702.

A plurality of molding conditions are stored in the storage unit 701. The molding conditions include information about the mold unit 800 ("mold space" of the mold unit 800, "mold clamping force-generation-mold pressure position" to be described later, and the like), the metering conditions of the injection unit 300, operating conditions for each mode selected in an automatic fall setting portion 773 to be described later, and the like. Further, an identification code is assigned to each molding condition.

The communication port 702 is connected to a communication port 711 of a sequencer 710.

The sequencer 710 includes a communication port 711, a communication port 712, and an I/O port 713. The communication port 711 is communicably connected to the communication port 702 of the molding machine-control device 700. The sequencer 710 is a device that converts an input signal and outputs the converted signal on the basis of preset logic.

The communication port 712 is connected to a communication port 721 of the change device-control device 26 provided in the mold change device 20. According to this configuration, the molding machine-control device 700 can command the mold change device 20 to operate through the sequencer 710. Further, the operating state of the mold change device 20 is input to the molding machine-control device 700 through the sequencer 710.

The I/O port 713 is connected to an I/O port 722 of the clamping device 30. According to this configuration, the molding machine-control device 700 can command the clamping device 30 to operate through the sequencer 710. Further, the operating state of the clamping device 30 is input to the molding machine-control device 700 through the sequencer 710.

Furthermore, the I/O port 713 is connected to an I/O port 723 of the automatic coupler 40. According to this configuration, the molding machine-control device 700 can command the automatic coupler 40 to operate through the sequencer 710. Further, the operating state of the automatic coupler 40 is input to the molding machine-control device 700 through the sequencer 710.

As described above, the molding machine-control device 700 of the injection molding machine 10 can control the peripheral devices (the mold change device 20, the clamping device 30, and the automatic coupler 40) and can acquire the operating states of the peripheral devices.

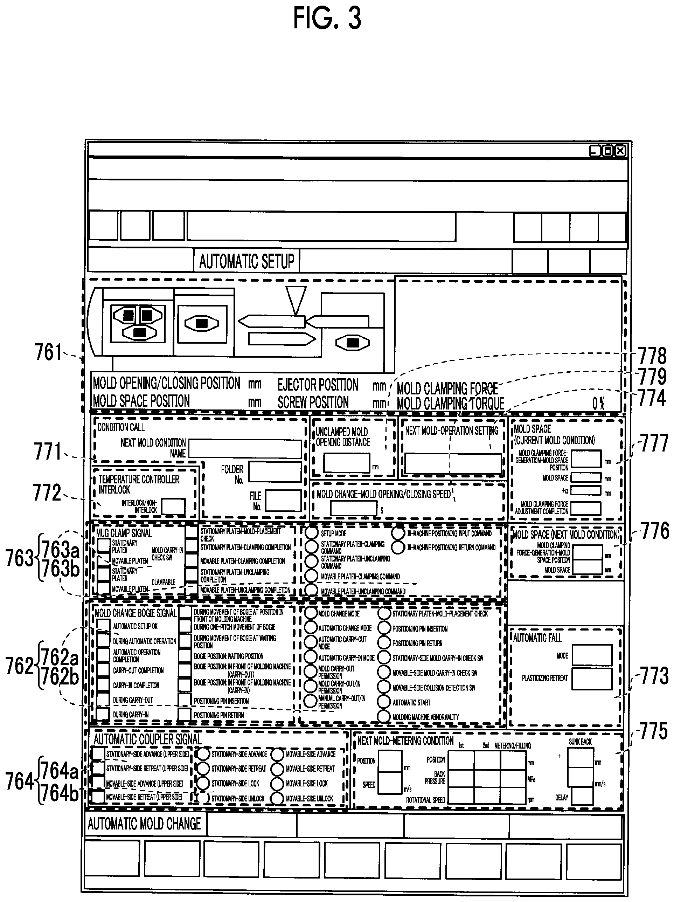

Fig. 3 is an example of a display screen displayed on the display unit 760. The display screen shown in Fig. 3 is an example of a display screen that displays settings and actual values (operating states) for setup work. Here, the setup work is work that allows the mass production of molding products to be performed by the injection molding machine 10. For example, the setup work includes the change of a mold (the attachment of a mold), the adjustment of the mold clamping force of the mold unit 800, the temperature control of the mold unit 800, the metering of a molding material performed by the injection unit 300, the purge of a molding material of the injection unit 300, and the like.

The display screen includes a display portion 761 that displays the operating state of the injection molding machine 10. Further, the display screen includes a display portion 762 that shows information about the mold change device 20. The display portion 762 includes an operating state display portion 762a that shows the operating state of the mold change device 20, and a command display portion 762b that shows a command to be given to the mold change device 20. Likewise, the display screen includes a display portion 763 that shows information about the clamping device 30. The display portion 763 includes an operating state display portion 763a that shows the operating state of the clamping device 30, and a command display portion 763b that shows a command to be given to the clamping device 30. Furthermore, the display screen includes a display portion 764 that shows information about the automatic coupler 40. The display portion 764 includes an operating state display portion 764a that shows the operating state of the automatic coupler 40, and a command display portion 764b that shows a command to be given to the automatic coupler 40. The progress state of setup work is displayed on the display screen as described above.

The display screen includes a condition call setting portion 771. Here, the identification codes and the molding conditions are stored in the storage unit 701 in association with each other. The condition call setting portion 771 is adapted so that an identification code used to call a molding condition required for the production of a molding product using the next mold unit 800B can be input to the condition call setting portion 771 before the production of a molding product using the current mold unit 800A is finished. Accordingly, the production of a molding product using the next mold unit 800B can be reserved before the production of a molding product using the current mold unit 800A is finished. In an example shown in Fig. 3, the condition name of a molding condition and the number of a folder and the number of a file in which the molding condition is stored are displayed in the condition call setting portion 771 in a case where an identification number as an identification code is input to an input field (not shown).

The display screen includes a temperature controller-interlocking setting portion 772, an automatic fall setting portion 773, and a next mold-operation setting portion 774. Here, the injection molding machine 10 determines that production has ended at a point of time when a filling operation required for final molding is finished in a case where final molding for the production of a molding product using the current mold unit 800A is performed. The temperature controller-interlocking setting portion 772 is adapted to be capable of selecting whether or not to stop the temperature controller at this point of time. Further, the automatic fall setting portion 773 is adapted to be capable of selecting whether or not to retreat the injection unit 300 serving as a plasticizing unit at this point of time. Furthermore, the next mold-operation setting portion 774 can set whether or not to perform the metering operation of the injection unit 300 at this point of time. Further, the display screen includes a next mold-metering condition display portion 775. The metering condition of the next mold (mold unit 800B) included in the molding condition corresponding to the identification code input to the condition call setting portion 771 is displayed in the next mold-metering condition display portion 775.

The display screen includes a next mold-space condition display portion 776. Here, mold space positions for generating mold clamping forces are stored in the molding conditions stored in the storage unit 701. Further, the mold space of the mold unit 800 is stored in the molding conditions. The mold clamping force-generation-mold space position and the mold space of the next mold (mold unit 800B) included in the molding condition corresponding to the identification code input to the condition call setting portion 771 are displayed in the next mold-space condition display portion 776.

Furthermore, the display screen includes a current mold-space condition display portion 777. The mold clamping force-generation-mold space position and the mold space of the current mold (mold unit 800A) included in the current molding condition are displayed in the current mold-space condition display portion 777. Moreover, an adjustment distance (+α) from the molding condition is displayed in the current mold-space condition display portion 777. Further, whether or not the adjustment of a mold clamping force has been completed is displayed in the current mold-space condition display portion 777.

Furthermore, the display screen includes an unclamped mold opening distance setting portion 778 and a mold change-mold opening/closing speed setting portion 779. The unclamped mold opening distance setting portion 778 is adapted so that a mold opening distance at the time of unclamping can be input to the unclamped mold opening distance setting portion 778. The mold change-mold opening/closing speed setting portion 779 is adapted so that a mold opening/closing speed during the change of a mold can be input to the mold change-mold opening/closing speed setting portion 779.

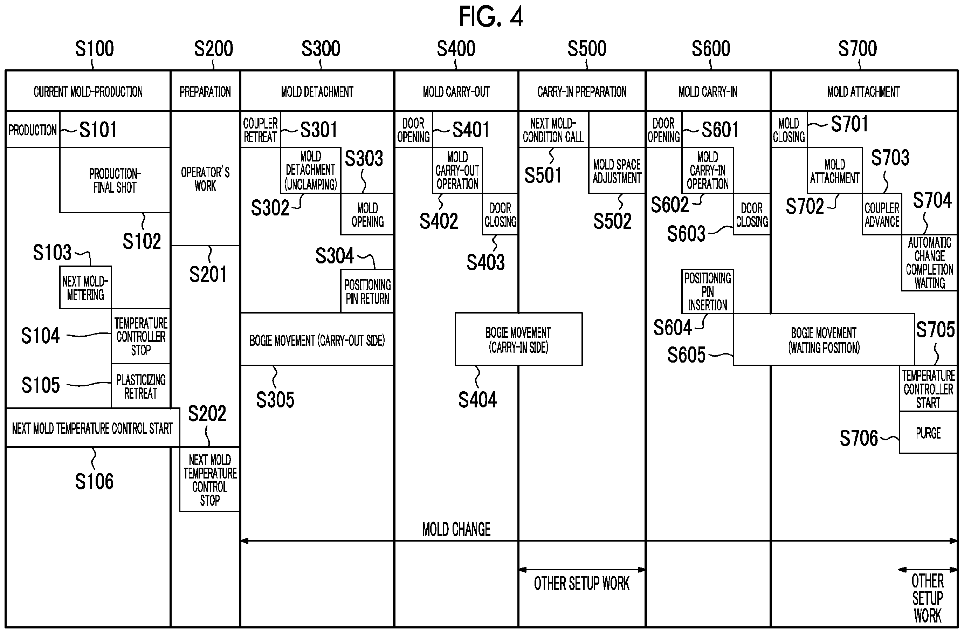

Fig. 4 is a Gantt chart illustrating an example of setup work in the injection molding system S according to this embodiment. Here, the automatic change of the mold unit 800 (the carry-in and carry-out of the mold unit 800) will be described as the setup work by way of example. Further, the adjustment of the mold clamping force of the mold unit 800B having been changed, the temperature control of the mold unit 800B, the metering of a molding material performed by the injection unit 300, and the purge of a molding material of the injection unit 300 are performed as other setup work. In Fig. 4, the injection molding machine 10 produces a molding product using the mold unit 800A. Further, it will be described that the bogie 22 is positioned at the waiting position, the mold unit 800A is attached to the injection molding machine 10, the mold unit 800B is placed on the first placement part 221A of the bogie 22, and the second placement part 221B is in an empty state.

A current mold-production step S100 includes a production step S101 and a production-final shot step S102. The production step S101 is a step of producing a molding product by the current mold unit 800A. The production-final shot step S102 is a step of finally producing a molding product by the current mold unit 800A.

Here, in a case where automatic fall is set in the automatic fall setting portion 773, the injection molding machine 10 determines that production has ended at a point of time when a filling operation required for final molding is finished and performs a next mold-metering step S103. Here, a metering operation of the injection unit 300 is performed on the basis of the next mold-metering condition of the next mold-metering condition display portion 775 (a molding condition corresponding to an identification code set in the condition call setting portion 771). That is, setup work for the next mold unit 800B is performed during the production of a molding product using the current mold unit 800A.

Further, in a case where the interlocking of the temperature controller is set in the temperature controller-interlocking setting portion 772, a temperature controller stop step S104 is performed. Accordingly, the temperature control of the mold unit 800A ends. Furthermore, in a case where the retreat of the plasticizing unit is set in the automatic fall setting portion 773, a plasticizing retreat step S105 is performed. Accordingly, the injection unit 300 is retreated by the moving unit (not shown) . Further, the mold change device 20 performs a step S106 of starting the temperature control of the mold unit 800B that is the next mold. Here, a heating medium is supplied to the mold unit 800B placed on the bogie 22 through the automatic coupler 223A and the connecting part 860, so that the temperature of the mold unit 800B is preliminarily controlled. In a case where the preliminary temperature control of the mold unit 800B ends, a step S202 of stopping the temperature control of the mold unit 800B, which is the next mold, is performed.

In a preparation step S200, an operator works (S201) . For example, the operator checks the mold unit 800B to be carried in. Further, the operator checks the opening locking of the mold units 800A and 800B. Furthermore, the operator checks whether or not the preliminary temperature control of the mold unit 800B has ended. In a case where the checks of these end, the operator operates a switch that is provided on the operation unit 750 and used to perform the automatic change of the mold unit 800.

Here, automatic mold change includes a mold detachment step S300 of detaching the mold unit 800A from the injection molding machine 10, a mold carry-out step S400 of carrying the mold unit 800A out of the injection molding machine 10, a carry-in preparation step S500 performed before carrying the mold unit 800B in the injection molding machine 10, a mold carry-in step S600 of carrying the mold unit 800B in the injection molding machine 10, and a mold attachment step S700 of attaching the mold unit 800B to the injection molding machine 10.

The mold detachment step S300 includes a coupler retreat stepS301, amolddetachment (unclamping) stepS302, amoldopening stepS303, a positioning pin return step S304, and a bogie movement step S305. The coupler retreat step S301, the mold detachment (unclamping) step S302, and the mold opening step S303 are sequentially performed.

In the coupler retreat step S301, the automatic coupler 40 is retreated to release the connection between the automatic coupler 40 and the connecting part 860 of the mold unit 800. Specifically, the molding machine-control device 700 transmits a retreat command to the automatic coupler 40 through the sequencer 710. In a case where the automatic coupler 40 is retreated, the automatic coupler 40 transmits an operating state to the molding machine-control device 700 through the sequencer 710.

In the mold detachment (unclamping) step S302, the clamping of the mold unit 800A performed by the clamping device 30 is released. Specifically, the molding machine-control device 700 transmits an unclamping command to the clamping device 30 through the sequencer 710. In a case where the clamping of the clamping device 30 is released, the clamping device 30 transmits an operating state to the molding machine-control device 700 through the sequencer 710.

In the mold opening step S303, an interval between the stationary platen 110 and the movable platen 120 is increased so that the mold unit 800A can be carried out. Specifically, the molding machine-control device 700 controls the mold clamping motor 160 of the mold clamping unit 100 to retreat the movable platen 120 with a mold opening distance set in the unclamped mold opening distance setting portion 778 and to increase an interval between the stationary platen 110 and the movable platen 120.

In the positioning pin return step S304, the positioning pin is removed from the mold unit 800A. Specifically, the molding machine-control device 700 transmits a positioning pin return command to the clamping device 30 through the sequencer 710. In a case where the positioning pin is removed, the clamping device 30 transmits an operating state to the molding machine-control device 700 through the sequencer 710. The positioning pin return step S304 may be performed so as to overlap with the mold opening step S303.

In the bogie movement step S305, the bogie 22 is moved so that the second placement part 221B is moved to the delivery position P. Specifically, the molding machine-control device 700 transmits a command to the change device-control device 26 of the mold change device 20. The change device-control device 26 causes the bogie 22 to move on the basis of the command. In a case where the movement of the bogie 22 is completed, the change device-control device 26 transmits an operating state to the molding machine-control device 700. The bogie movement step S305 may be performed so as to overlap with the coupler retreat step S301, the mold detachment (unclamping) step S302, and the mold opening step S303.

The mold carry-out step S400 includes a door opening step S401, a mold carry-out operation step S402, a door closing step S403, and a bogie movement step S404. The door opening step S401, the mold carry-out operation step S402, and the door closing step S403 are sequentially performed.

In the door opening step S401, the door 195 is opened. Specifically, the molding machine-control device 700 controls the door opening/closing mechanism 196 to open the door 195.

In the mold carry-out operation step S402, the mold unit 800A is carried out. Specifically, the molding machine-control device 700 transmits a command to carry the mold unit out to the mold change device 20 (change device-control device 26) through the sequencer 710. The change device-control device 26 controls the driving rollers 24 and the conveyor unit 222B to place the mold unit 800A on the second placement part 221B. In a case where the carry-out of the mold unit 800A is completed, the change device-control device 26 transmits an operating state to the molding machine-control device 700.

In the door closing step S403, the door 195 is closed. Specifically, the molding machine-control device 700 controls the door opening/closing mechanism 196 to close the door 195.

In the bogie movement step S404, the bogie 22 is moved so that the first placement part 221A is moved to the delivery position P. Specifically, the molding machine-control device 700 transmits a command to the change device-control device 26 of the mold change device 20. The change device-control device 26 causes the bogie 22 to move on the basis of the command. In a case where the movement of the bogie 22 is completed, the change device-control device 26 transmits an operating state to the molding machine-control device 700. The bogie movement step S404 may be performed after the mold carry-out operation step S402, or may be performed so as to overlap with the door closing step S403 and the carry-in preparation step S500.

In the carry-in preparation step S500, the bogie movement step S404, which is a part of mold change work, is continuously performed. Further, the adjustment of the mold clamping force of the mold unit 800B, which is the next mold, is performed as other setup work during the change of a mold. Here, the carry-in preparation step S500 includes a next mold-condition call step S501 and a mold space adjustment step S502. The next mold-condition call step S501 and the mold space adjustment step S502 are sequentially performed.

In the next mold-condition call step S501, the condition of the mold unit 800B to be carried in the injection molding machine 10 next is called. Specifically, the molding machine-control device 700 calls a molding condition, which corresponds to an identification code set in the condition call setting portion 771, from the storage unit 701.

In the mold space adjustment step S502, the mold clamping unit 100 is adjusted on the basis of the molding condition of the mold unit 800B called in the next mold-condition call step S501. Specifically, the molding machine-control device 700 controls the mold space adjustment mechanism 180 of the mold clamping unit 100 to adjust an interval between the stationary platen 110 and the toggle support 130 on the basis of a mold clamping force-generation-mold space position displayed in the next mold-space condition display portion 776.

The mold carry-in step S600 includes a door opening step S601, a mold carry-in operation step S602, a door closing step S603, a positioning pin insertion step S604, and a bogie movement step S605. The door opening step S601, the mold carry-in operation step S602, and the door closing step S603 are sequentially performed.

In the door opening step S601, the door 195 is opened. Specifically, the molding machine-control device 700 controls the door opening/closing mechanism 196 to open the door 195.

In the mold carry-in operation step S602, the mold unit 800B is carried in. Specifically, the molding machine-control device 700 transmits a command to carry the mold unit in to the mold change device 20 (change device-control device 26) through the sequencer 710. The change device-control device 26 controls the driving rollers 24 and the conveyor unit 222A to carry the mold unit 800B in the mold clamping unit 100 from the first placement part 221A. In a case where the carry-in of the mold unit 800B is completed, the change device-control device 26 transmits an operating state to the molding machine-control device 700.

In the door closing step S603, the door 195 is closed. Specifically, the molding machine-control device 700 controls the door opening/closing mechanism 196 to close the door 195.

In the positioning pin insertion step S604, the positioning pin is inserted into the mold unit 800B. Specifically, the molding machine-control device 700 transmits a command to insert the positioning pin to the clamping device 30 through the sequencer 710. In a case where the positioning pin is inserted, the clamping device 30 transmits an operating state to the molding machine-control device 700 through the sequencer 710. The positioning pin insertion step S604 may be performed so as to overlap with the mold carry-in operation step S602.

In the bogie movement step S605, the bogie 22 is moved to the waiting position (see Fig. 1). Specifically, the molding machine-control device 700 transmits a command to the change device-control device 26 of the mold change device 20. The change device-control device 26 causes the bogie 22 to move on the basis of the command. In a case where the movement of the bogie 22 is completed, the change device-control device 26 transmits an operating state to the molding machine-control device 700. The bogie movement step S605 may be performed after the mold carry-in operation step S602, or may be performed so as to overlap with the door closing step S603 and the mold attachment step S700.

The mold attachment step S700 includes a mold closing step S701, a mold attachment (clamping) step S702, a coupler advance step S703, a waiting step S704, a temperature controller start step S705, and a purge step S706. The mold closing step S701, the mold attachment (clamping) step S702, the coupler advance step S703, and the waiting step S704 are sequentially performed.

In the mold closing step S701, an interval between the stationary platen 110 and the movable platen 120 is reduced so that the mold unit 800B is pinched. Specifically, the molding machine-control device 700 controls the mold clamping motor 160 of the mold clamping unit 100 to advance the movable platen 120 and to reduce an interval between the stationary platen 110 and the movable platen 120.

In the mold attachment (clamping) step S702, the mold unit 800B is clamped by the clamping device 30. Specifically, the molding machine-control device 700 transmits a clamping command to the clamping device 30 through the sequencer 710. In a case where the mold unit 800B is clamped by the clamping device 30, the clamping device 30 transmits an operating state to the molding machine-control device 700 through the sequencer 710.

In the coupler advance step S703, the automatic coupler 40 is advanced so that the automatic coupler 40 and the connecting part 860 of the mold unit 800 are connected to each other. Specifically, the molding machine-control device 700 transmits an advance command to the automatic coupler 40 through the sequencer 710. In a case where the automatic coupler 40 is advanced, the automatic coupler 40 transmits an operating state to the molding machine-control device 700 through the sequencer 710.

In the waiting step S704, the injection molding machine waits until all the setup work is completed after the change of a mold is completed.

Further, the temperature control of the mold unit 800B is performed as other setup work during the change of a mold. The temperature controller start step S705 is a step of starting the temperature controller (not shown) to control the temperature of the mold unit 800B. Specifically, the molding machine-control device 700 transmits a start command to the temperature controller (not shown) through the sequencer 710. The temperature controller supplies temperature control fluid to the mold unit 800B through the automatic coupler 40 and the connecting part 860. The temperature controller start step S705 may be performed after the coupler advance step S703, or may be performed so as to overlap with the waiting step S704.

Furthermore, the purge of the injection unit 300 is performed as other setup work during the change of a mold. In the purge step S706, the molding material in the injection unit 300 is purged. Specifically, the molding machine-control device 700 controls the injection unit 300 to purge the molding material. The purge step S706 may be performed after the coupler advance step S703, or may be performed so as to overlap with the waiting step S704.

According to the injection molding machine 10 of this embodiment, other setup work can be performed during the change of a mold as described above. Accordingly, since work time for setup work can be shortened, a period in which the injection molding machine 10 is stopped can be shortened. Therefore, the productivity of the injection molding machine 10 can be improved.

Specifically, the injection molding machine 10 according to this embodiment performs the adjustment of the mold clamping force of the mold unit 800B in advance in a time before the next mold unit 800B is carried in after the previous mold unit 800A is carried out during the change of a mold. Positions where a mold clamping force is generated are stored in advance together with the molding conditions. Further, the molding condition of the next mold is input in advance. Accordingly, work time for setup work can be shortened in comparison with a case where the adjustment of a mold clamping force is performed after the change of a mold. Furthermore, since the adjustment of a mold clamping force can be performed on the basis of the molding condition of the next mold preset in the condition call setting portion 771, time for the adjustment of a mold clamping force can be shortened.

The adjustment of a mold clamping force may be performed after the mold unit 800B is attached to the mold clamping unit 100. Accordingly, a mold clamping force can be accurately adjusted. Further, since the adjustment of a mold clamping force is performed in advance in the mold space adjustment step S502, time required for the adjustment of a mold clamping force can be shortened.

Furthermore, the temperature controller start step S705 and the purge step S706 are started so as to overlap with the bogie movement step S605. Accordingly, work time for setup work can be shortened.

The injection molding system S according to the embodiment and the like have been described above, but the invention is not limited to the above-mentioned embodiment and the like and can have various modifications and improvements without departing from the scope of the invention disclosed in claims.

It has been described that other setup work overlaps during the change of a mold since other setup work is started and ended before the change of a mold and other setup work is started during the change of a mold. However, the invention is not limited thereto. Other setup work may be started before the change of a mold and other setup work may end during the change of a mold so that setup work overlaps during the change of a mold. For example, the automatic change of a take-out machine chuck plate (not shown. A take-out machine is a device for automatically taking out a molding product and the take-out machine chuck plate is a part that pinches a product provided at the tip portion of the take-out machine) may be performed. Accordingly, work time for setup work can be shortened.

Further, other setup work, which is performed so as to overlap with the change of a mold, is not limited to the above-mentioned work, and operations for automatically changing the operations or conditions of peripheral devices required for molding or setup work may be performed.

### Brief Description of the Reference Symbols

S: injection molding system
100: mold clamping unit
10: injection molding machine
20: mold change device
22: bogie
26: change device-control device
30: clamping device
40: automatic coupler
30a, 30b: clamping device
195: door
196: door opening/closing mechanism
700: molding machine-control device (control unit)
701: storage unit
750: operation unit
760: display unit
800: mold unit
P: delivery position

## Claims

1. An injection molding machine (10) comprising:
a mold clamping unit (100) to which a mold unit (800) is attached; and
a control unit (700),
**characterized in that**
the control unit (700) is configured to perform other setup work during a change of the mold unit (800) attached to the mold clamping unit (100).

2. The injection molding machine (10) according to claim 1,
wherein the control unit (700) is configured to start other setup work during the change of the mold unit (800) attached to the mold clamping unit (100).

3. The injection molding machine (10) according to claim 1 or 2,
wherein the control unit (700) is configured to end other setup work during the change of the mold unit (800) attached to the mold clamping unit (100).

4. The injection molding machine (10) according to any one of claims 1 to 3, further comprising:
a mold clamping force-adjustment mechanism configured to adjust a mold clamping force depending on the mold unit (800) attached to the mold clamping unit (100),
wherein the control unit (700) is configured to adjust a mold clamping force depending on a next mold unit (800B) during the change of the mold unit (800).

5. The injection molding machine (10) according to claim 4,
wherein the control unit (700) is configured to adjust a mold clamping force depending on the next mold unit (800B) before the next mold unit (800B) is carried in after the current mold unit (800A) is carried out.

6. The injection molding machine (10) according to any one of claims 1 to 5, further comprising:
an injection unit (300) configured to inject a molding material into the mold unit (800),
wherein the control unit (700) is configured to purge the molding material of the injection unit (300) during the change of the mold unit (800).

7. The injection molding machine (10) according to any one of claims 1 to 5, further comprising:
a temperature controller configured to control a temperature of the mold unit (800),
wherein the control unit (700) is configured to start controlling the temperature of a next mold unit (800B) during the change of the mold unit (800).

## Patentansprüche

1. Spritzgießmaschine (10), umfassend:
eine Formschließ-/klemmeinheit (100), an der eine Formeinheit (800) angebracht ist; und
eine Steuereinheit (700),
**dadurch gekennzeichnet, dass**
die Steuereinheit (700) konfiguriert ist, während eines Wechsels der an der Formschließ-/klemmeinheit (100) angebrachten Formeinheit (800) weitere Einrichtungsarbeiten durchzuführen.

2. Spritzgießmaschine (10) gemäß Anspruch 1,
wobei die Steuereinheit (700) konfiguriert ist, während des Wechsels der an der Formschließ-/klemmeinheit (100) angebrachten Formeinheit (800) weitere Einrichtungsarbeiten zu starten.

3. Spritzgießmaschine (10) gemäß Anspruch 1 oder 2, wobei die Steuereinheit (700) konfiguriert ist, während des Wechsels der an der Formschließ-/klemmeinheit (100) angebrachten Formeinheit (800) weitere Einrichtungsarbeiten zu beenden.

4. Spritzgießmaschine (10) gemäß einem der Ansprüche 1 bis 3, ferner umfassend:
einen Formschließ-/klemmkrafteinstellmechanismus, der konfiguriert ist, eine Formschließ-/klemmkraft in Abhängigkeit von der an der Formschließ-/klemmeinheit (100) angebrachten Formeinheit (800) einzustellen, wobei die Steuereinheit (700) konfiguriert ist, eine Formschließ-/klemmkraft in Abhängigkeit von einer nächsten Formeinheit (800B) während des Wechsels der Formeinheit (800) einzustellen.

5. Spritzgießmaschine (10) gemäß Anspruch 4,
wobei die Steuereinheit (700) konfiguriert ist, eine Formschließ-/klemmkraft in Abhängigkeit von der nächsten Formeinheit (800B) einzustellen, bevor die nächste Formeinheit (800B) hereingebracht wird, nachdem die aktuelle Formeinheit (800A) herausgebracht wird.

6. Spritzgießmaschine (10) gemäß einem der Ansprüche 1 bis 5, ferner umfassend:
eine Einspritzeinheit (300), die konfiguriert ist, ein Formmaterial in die Formeinheit (800) einzuspritzen,
wobei die Steuereinheit (700) konfiguriert ist, das Formmaterial der Einspritzeinheit (300) während des Wechsels der Formeinheit (800) zu spülen.

7. Spritzgießmaschine (10) gemäß einem der Ansprüche 1 bis 5, ferner umfassend:
eine Temperatursteuerung, die konfiguriert ist, eine Temperatur der Formeinheit (800) zu steuern,
wobei die Steuereinheit (700) konfiguriert ist,
Steuern der Temperatur einer nächsten Formeinheit (800B) während des Wechsels der Formeinheit (800) zu starten.

## Revendications

1. Une machine de moulage par injection (10) comprenant :
une unité de fermeture de moule (100) à laquelle est attachée une unité de moule (800) ; et
une unité de commande (700),
**caractérisée en ce que**
l'unité de commande (700) est configurée pour effectuer un autre travail de configuration pendant un changement de l'unité de moule (800) attachée à l'unité de fermeture de moule (100).

2. La machine de moulage par injection (10) selon la revendication 1,
dans laquelle l'unité de commande (700) est configurée pour démarrer un autre travail de configuration pendant le changement de l'unité de moule (800) attachée à l'unité de fermeture de moule (100).

3. La machine de moulage par injection (10) selon la revendication 1 ou 2,
dans laquelle l'unité de commande (700) est configurée pour terminer un autre travail de configuration pendant le changement de l'unité de moule (800) attachée à l'unité de fermeture de moule (100).

4. La machine de moulage par injection (10) selon l'une quelconque des revendications 1 à 3, comprenant en outre :
un mécanisme d'ajustement de force de fermeture de moule configuré pour ajuster une force de fermeture de moule en fonction de l'unité de moule (800) attachée à l'unité de fermeture de moule (100),
dans lequel l'unité de commande (700) est configurée pour ajuster une force de fermeture de moule en fonction d'une unité de moule suivante (800B) pendant le changement de l'unité de moule (800).

5. La machine de moulage par injection (10) selon la revendication 4,
dans laquelle l'unité de commande (700) est configurée pour ajuster une force de fermeture de moule en fonction de l'unité de moule suivante (800B) avant que l'unité de moule suivante (800B) ne soit chargée une fois que l'unité de moule actuelle (800A) est déchargée.

6. La machine de moulage par injection (10) selon l'une quelconque des revendications 1 à 5, comprenant en outre :
une unité d'injection (300) configurée pour injecter un matériau de moulage dans l'unité de moule (800),
dans laquelle l'unité de commande (700) est configurée pour purger le matériau de moulage de l'unité d'injection (300) pendant le changement de l'unité de moule (800).

7. La machine de moulage par injection (10) selon l'une quelconque des revendications 1 à 5, comprenant en outre :
un régulateur de température configuré pour réguler une température de l'unité de moule (800),
dans laquelle l'unité de commande (700) est configurée pour démarrer la régulation de la température d'une unité de moule suivante (800B) pendant le changement de l'unité de moule (800).
